# FASCICULE DE BREVET EUROPEEN

(11) **EP 0 448 451 B1**
(45) Date de publication et mention de la délivrance du brevet: **29.09.1993**
(21) Numéro de dépôt: 91400718.2
(22) Date de dépôt: 18.03.1991
(51) Int. Cl.: F16D 13/71

(54) **Mécanisme d'embrayage tiré à moyens de blocage en rotation du diaphragme, notamment pour véhicule automobile**
Zugkraftbetätigter Kupplungsmechanismus mit Drehsicherung der Tellerfeder, insbesondere für ein Kraftfahrzeug
Pulled-type clutch mechanism with means to prevent rotation of the diaphragm, especially for an automotive vehicle

(30) Priorité: 19.03.1990 FR 9003472
(43) Date de publication de la demande: 25.09.1991
(73) Titulaire: VALEO, 75848 Paris Cédex 17 (FR)
(72) Inventeur: Rivolta, Guido, F.80000 Amiens (FR); Gay, Christian, F-80090 Amiens (FR); Darras, Eric, F-60120 Breteuil/s/Noye (FR)
(74) Mandataire: Gamonal, Didier

(56) Documents cités:
- EP-A- 0 343 765
- FR-A- 2 550 835
- GB-A- 1 134 765
- GB-A- 2 148 415

## Description

La présente invention concerne les mécanismes d'embrayage à diaphragme du type tiré, notamment pour véhicule automobile.

Un tel mécanisme est décrit dans le document FR-A-2 463 874 et comporte au moins un plateau de pression, un couvercle et un diaphragme prenant appui sur le couvercle et agissant axialement sur le plateau de pression dans un sens pour lequel ledit plateau s'écarte dudit couvercle.

Dans un mécanisme du type tiré, le diaphragme prend appui par la périphérie externe de sa partie périphérique, formant rondelle "Belleville", sur le couvercle et par la périphérie interne de sa partie périphérique sur le plateau de pression.

Il importe donc d'éviter que le diaphragme puisse tourner et c'est la raison pour laquelle on a prévu, à la figure 14 du susmentionné document, des goupilles pour bloquer en rotation ledit diaphragme.

Ces goupilles sont engagées chacune dans un trou borgne du plateau de pression.

Cette disposition conduit à compliquer la fabrication du plateau de pression, et à augmenter le nombre de pièces du mécanisme.

Pour pallier cet inconvénient, on peut songer à doter le couvercle de pattes axiales pliées, pour coopérer avec les orifices du diaphragme présents à la racine des fentes de celui-ci, comme décrit dans le document FR-A-2 135 637.

Cette disposition conduit à une modification notable du couvercle et à une augmentation de l'encombrement axial si l'on ne veut pas perturber le basculement du diaphragme lors de l'opération de débrayage.

D'autres solutions sont envisageables, par exemple, comme décrit dans le document GB-A-2 148 415, on peut fractionner le couvercle et doter le diaphragme de saillies coopérant avec des évidements formés à la jonction de deux portions de couvercle. Cela conduit à modifier complètement le couvercle et complique l'assemblage.

En varainte, on peut rapporter par soudage des pièces supplémentaires à l'intérieur du couvercle, comme décrit dans le document GB-A-1 134 765.

On peut également, comme décrit dans le document FR-A-2 550 835, doter le plateau de réaction de protubérances faisant saillie intérieurement pour coopérer avec des languettes du diaphragme. Ceci conduit à une autre structure d'embrayage.

Il en est de même dans le document EP-A-0343765.

D'une manière générale, il importe de changer le moins possible le couvercle, de ne pas augmenter l'encombrement axial du mécanisme, ni de diminuer la résistance du couvercle ou de gêner le basculement du diaphragme.

La présente invention a pour objet de pallier ces inconvénients et donc de créer de nouveaux moyens de blocage en rotation du diaphragme n'affectant pas le plateau de pression, tout en modificant le moins possible le couvercle, en augmentant pas l'encombrement axial du mécanisme, et en ne diminuant pas la résistance du couvercle.

Suivant l'invention, un mécanisme du type susindiqué dans lequel le couvercle monobloc présente un fond se raccordant à une jupe annulaire d'orientation axiale, et dans lequel le diaphragme est doté d'au moins une saillie s'étendant radialement au delà de la périphérie externe dudit diaphragme, est caractérisé en ce que pour formation de moyens de blocage en rotation pour le diaphragme, la jupe du couvercle présente au moins une déformation locale, s'étendant vers l'extérieur du couvercle et propre à coopérer de manière complémentaire, au moins dans un sens circonférentiel, avec ladite saillie radiale du diaphragme.

Grâce à l'invention, le plateau de pression est inchangé, et le couvercle n'est pas affaibli.

L'outillage pour la formation du couvercle est peu modifié.

En outre, l'encombrement radial de l'ensemble n'est pas augmenté outre mesure, tandis que l'encombrement axial demeure inchangé.

Enfin, aucune pièce supplémentaire n'est nécessaire et la géométrie du couvercle est globalement conservée, son fond n'étant pas modifié, ce qui permet l'implantation de pièces de ventilation.

Suivant une forme de réalisation, les saillies ont une forme triangulaire à sommet tronqué.

Cette disposition permet un bon contact des saillies avec les déformations complémentaires du couvercle, et réduit l'encombrement radial ainsi que les usures.

En outre, elle favorise la robustesse du couvercle et du diaphragme ainsi que le centrage dudit diaphragme.

La description en annexe illustre l'invention en référence aux dessins annexés dans lesquels :
- la figure 1 est une vue partielle en coupe axiale d'un mécanisme selon l'invention ;
- la figure 2 est une vue partielle, avec arrachement local, suivant la flèche 2 de la figure 1.

Ainsi qu'on le sait un mécanisme d'embrayage pour véhicule automobile comporte des pièces de forme annulaire, à savoir un couvercle 10 monobloc, un plateau de pression 20, et, interposé entre ceux-ci un diaphragme 30, qui, prenant appui sur le couvercle 10, agit axialement sur le plateau de pression 20 dans un sens pour lequel celui-ci s'écarte du couvercle 10.

Le diaphragme 30 constitue un moyen élastique à action axiale décrit ci-après.

Ce mécanisme 1, formant un ensemble unitaire, est destiné à être rapporté sur un plateau de réaction 2, solidaire, ici, de l'arbre moteur du véhicule automobile à moteur à combustion interne, après insertion d'un disque de friction 3, solidaire en rotation, ici, de l'arbre d'entrée de la boîte de vitesses.

Le couvercle 10 est ici en forme d'assiette creuse et comporte un fond 13 ouvert centralement, s'étendant radialement vers l'intérieur et formant une paroi transversale de faible dimension, une jupe 12 annulaire périphérique d'orientation axiale, reliant le fond 13 à un rebord radial 11 faisant radialement saillie vers l'extérieur.

C'est ce rebord 11 qui permet la fixation du mécanisme 1 au plateau 2, à l'aide d'organes de fixation, le plus souvent des vis (non visibles), tandis qu'ici la jupe entoure le plateau 20.

Pour plus de précisions on se reportera au susmentionné document FR-A-2 463 874.

Il en est de même en ce qui concerne la liaison en rotation du plateau 20 au couvercle 10 avec mobilité axiale.

Pour mémoire on rappellera que le plateau 20, présente ici en saillie des pattes radiales, traversant chacune la jupe 12, à la faveur d'une échancrure de celle-ci.

Chaque patte du plateau 20 est attelée à une plage du rebord 11, décalé axialement en direction du fond 13, par au moins une languette élastique disposée tangentiellement à une circonférence de l'ensemble et liée par des rivets à une telle patte et à une telle plage (voir également le document GB-A-2 148 415).

Les languettes autorisent un déplacement axial du plateau 20 vis-à-vis du couvercle 10, tout en liant en rotation le plateau 20 au couvercle 10.

En variante on peut prévoir une liaison du type tenon-mortaise.

De même le couvercle 10 peut présenter par exemple des rehausses, comme dans le susmentionné document FR-A-2463874.

Dans tous les cas le couvercle 10 a une forme creuse et présente un fond se raccordant à une jupe annulaire.

Le diaphragme 30, également de forme annulaire, comporte une partie périphérique 31 élastique, formant rondelle Belleville, et une partie centrale fragmentée en doigts radiaux 32 par des fentes 33 formant à leur racines des orifices 35.

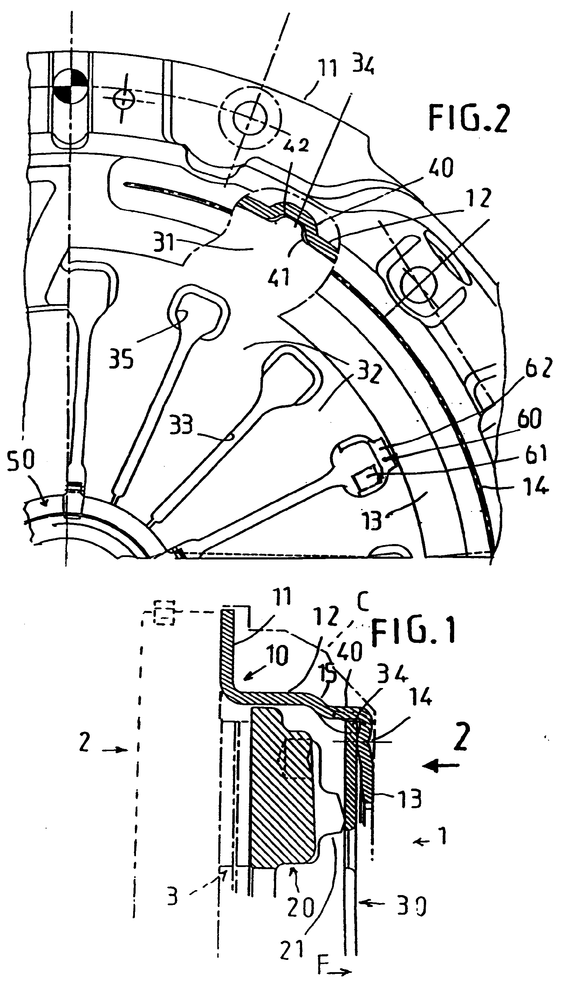

Par ses doigts 32, le diaphragme 30 est susceptible d'être soumis, lors de l'opération de débrayage, à l'action d'une butée de débrayage (représentée partiellement en 50 à la figure 2) agissant en traction dans le sens de la flèche F de la figure 1, sur l'extrémité des doigts 32 et plus précisément sur la face de ceux-ci tournée vers le plateau 20.

L'embrayage étant donc du type tiré, suivant une caractéristique usuelle de cet embrayage, le diamètre de la circonférence suivant laquelle la partie 31 prend appui sur le couvercle 10 est supérieur à celui de la circonférence suivant laquelle cette partie 31 porte sur le plateau de pression 20.

Ici, le diaphragme 30 prend appui par sa partie 31, d'une part, sur un cordon annulaire saillant formé à la faveur d'un embouti 14 pratiqué dans le fond 13 au voisinage immédiat de la jupe 12 et, d'autre part, sur des bossages 21 du plateau 20 séparés les uns des autres par des fentes.

Les bossages 21 sont disposés sur une même circonférence et s'étendent radialement en dessous de l'embouti 14.

Bien entendu les bossages 21 peuvent former un cordon, éventuellement rapporté, et le cordon 14 peut être fractionné en bossages.

La jupe 12 présente une réduction de diamètre à la faveur d'une zone de raccordement 15 inclinée, divisant la jupe 12 en deux parties, l'une de plus petit diamètre attenante au fond 13, l'autre de plus grand diamètre entourant le plateau 20 et se raccordant au rebord 11.

Ici, le couvercle 10 monobloc est en tôle emboutie en étant réalisé à la presse et est de faible épaisseur.

En variante il peut être en matière plastique renforcé ou en fonte en étant obtenu par moulage.

Des moyens 34,40 sont prévus pour bloquer en rotation le diaphragme 30. Ces moyens comportent au moins une saillie radiale 34 du diaphragme 30 s'étendant radialement au-delà de la périphérie externe du diaphragme 30.

Suivant l'invention, pour formation de moyens de blocage en rotation du diaphragme 30, la jupe 12 du couvercle 10 présente au moins une déformation locale 40 s'étendant vers l'extérieur du couvercle et propre à coopérer, de manière complémentaire et au moins dans un sens circonférentiel, avec ladite saillie 34 radiale du daphragme.

Dans les figures représentées, trois saillies 34 et trois déformations locales 40 sont prévues circulairement en étant régulièrement reparties.

Ici les saillies 34, d'un seul tenant avec la partie rondelle Belleville 31 du diaphragme, ont une forme de triangle isocèle à sommet tronqué avec deux faces inclinées en sens inverse, s'étendant de part et d'autre d'une partie plane, favorable à une réduction des usures, d'orientation globalement tangentielle par rapport à une circonférence donnée de l'ensemble. Les saillies 34 ont donc une forme trapézoïdale.

Les déformations locales 40, d'un seul tenant avec le couvercle 10, sont en forme de demi-onde et épousent intérieurement la forme des saillies 34.

Ces saillies 34 se raccordent à la partie 31 du diaphragme 30, par des arrondis 41 limitant les contraintes locales.

Les parties inclinées se raccordent à la partie plane également par des arrondis 42.

Les déformations 40 sont fermées circonférentiellement et s'étendent localement axialement du fond 13 à la zone de raccordement 15, en affectant en totalité la partie de diamètre réduit de la jupe 12. Elles prolongent donc le fond 13 tout en rigidifiant celui-ci et en étant fermées.

Elles délimitent donc intérieurement des rainures axiales en formant des nervures de raidissement creuses. Ces déformations ou nervures 40 s'étendent sur une circonférence de diamètre inférieur à celui de la partie de plus grand diamètre de la jupe 12 (figure 2).

On appréciera que la forme triangulaire tronquée des saillies 34 permet d'augmenter latéralement les zones de contact avec la déformation 40 associée, tout en facilitant le centrage du diaphragme, et que les arrondis 41,42 évitent les coincements. De plus, les caractéristiques élastiques du diaphragme ne sont pas perturbées par les déformations 40 de faible hauteur.

En outre circonférentiellement, la taille de la saillie est augmentée à sa base, ce qui rend plus facile la formation des déformations 40, en limitant les ruptures et la formation de criques dans le couvercle, notamment lorsque celui-ci est en tôle, de faible épaisseur, et dans le diaphragme.

Cette réalisation facilite également une réalisation par moulage, lorsque le couvercle est en matière plastique ou en fonte.

De plus, la taille radiale des saillies 34 et des déformations 40 est réduite, ce qui permet de rester dans l'encombrement radial délimité par le carter C (figure 1) entourant le couvercle 1.

Ainsi qu'il ressort à l'évidence de la description, dans tous les cas, l'encombrement axial du mécanisme 1 reste inchangé, et les déformations locales 40 permettent de raidir le couvercle, tout en rendant possible la formation de l'embouti 14, notamment lorsque le couvercle est en tôle de faible épaisseur.

De plus, le basculement du diaphragme 30, lors du débrayage, n'est pas gêné.

Bien entendu un léger jeu, notamment radial, est prévu entre les saillies et les déformations, pour permettre un basculement aisé du diaphragme.

On appréciera, lorsque le couvercle est en tôle, que les déformations 40 conduisent à un écrouissage local du couvercle augmentant sa résistance.

En outre, on tire parti au maximum de la configuration de la jupe, la réalisation selon l'invention facilitant le montage du diaphragme 30 par enfilage axial des saillies 34 dans les déformations du couvercle 10. De plus, le fond 13 du couvercle annulaire demeure inchangé et s'étend au-delà des orifices 35.

Cela permet, si désiré, de rapporter par exemple par agrafage ou sertissage, des pièces de ventilation 60 sur le diaphragme à la faveur de certains orifices 35 (trois de ceux-ci par exemple) et ce dans l'encombrement axial du mécanisme d'embrayage 1.

Tel que visible à la figure 2, la pièce 60 comporte une patte 62 s'étendant radialement en-dessous du fond 13 sur la face de la partie 31 du diaphragme tourné vers le fond 13, ladite patte 62 contournant radialement en crochet le bord de la partie 31 pour s'appuyer sur la face opposée de la partie 31 tournée vers le plateau 20. La patte 62 traverse donc axialement l'orifice 35 et enserre localement le bord interne de la partie 31 délimité par l'orifice 35 de forme rectangulaire. Elle est repliée radialement en direction opposée à l'axe de l'ensemble en s'étendant radialement entre deux bossages 21.

Cette pièce présente des pattes supplémentaires, solidaires de la patte 62, pour contact avec les bords latéraux ou circonférentiels d'un orifice 35. L'une de ces pattes forme une ailette 61 inclinée s'étendant à l'intérieur de l'orifice 35. Ainsi, lorsque le mécanisme tourne, l'ailette 61 force l'air à pénétrer à l'intérieur du couvercle 13 à travers l'orifice 35 pour ventiler le plateau de pression 20 à bossages 21 séparés pour ce faire.

Bien entendu la présente invention n'est pas limitée à l'exemple de réalisation décrit.

En particulier le couvercle 10 pourrait, en étant plus épais, porter un jonc pour l'appui du diaphragme 30 et le mécanisme peut comporter plusieurs plateaux de pression 20 et des disques 3.

Bien entendu le nombre des déformations 40 et saillies 34 est déterminé selon les applications.

Les saillies 34 peuvent consister en des pattes rectangulaires ou être en demi-cercle.

Enfin les déformations 40 peuvent être inchangées, et les saillies 34 être modifiées et ne présenter latéralement qu'une partie ou bord incliné, l'autre étant par exemple rectiligne.

En effet, en alternant les bords inclinés d'une saillie à l'autre, il est possible de bloquer en rotation le diaphragme. Dans tous les cas, les déformations locales ont une forme complémentaire, au moins dans un sens circonférentiel, à celle des saillies.

## Revendications

1. Mécanisme d'embrayage à diaphragme du type tiré, notamment pour véhicule automobile, comportant un couvercle annulaire (10) monobloc avec un fond (13) se raccordant à une jupe (12) périphérique d'orientation axiale, au moins un plateau de pression (20), lié en rotation au couvercle (10) et mobile axialement vis-à-vis dudit couvercle (10), un diaphragme (30) qui, prenant appui sur le fond (13) du couvercle (10), agit axialement sur le plateau de pression (20), dans un sens pour lequel ledit plateau (20) s'écarte du couvercle (10), dans lequel le diaphragme (30) présente une partie périphérique (31) formant rondelle Belleville, s'appuyant sur un appui (14) porté par le fond (13) du couvercle (10) et radialement plus à l'intérieur portant sur un appui (21) porté par le plateau de pression (20), et dans lequel le diaphragme (30) est doté d'au moins une saillie (34) s'étendant radialement au-delà de la périphérie externe dudit diaphragme (30), caractérisé en ce que, pour formation de moyens de blocage en rotation du diaphragme (30), la jupe (12) du couvercle (10) présente au moins une déformation locale (40) s'étendant vers l'extérieur du couvercle et propre à coopérer, de manière complémentaire et au moins dans un sens circonférentiel, avec ladite saillie radiale (34) du diaphragme (30).

2. Mécanisme selon la revendication 1, caractérisé en ce que la saillie (34) a une forme triangulaire à sommet tronqué.

3. Mécanisme selon la revendication 2, caractérisé en ce que la saillie (34) comporte deux faces inclinées en sens inverse, s'étendant de part et d'autre d'une partie plane.

4. Mécanisme selon la revendication 2 ou 3, caractérisé en ce que ladite partie plane est d'orientation globalement tangentielle par rapport à une circonférence donnée de l'ensemble.

5. Mécanisme selon la revendication 4, caractérisé en ce que la saillie (34) se raccorde à la partie périphérique (31) du diaphragme (30) par des arrondis (41).

6. Mécanisme selon l'une quelconque des revendications 1 à 5, caractérisé en ce que la déformation locale (40) est en forme de demi-onde et épouse intérieurement, au moins dans un sens circonférentiel, la forme de la saillie (34).

7. Mécanisme selon la revendication 6, caractérisé en ce que la déformation locale (40) est fermée circonférentiellement et s'étend axialement en direction opposée au fond (13) du couvercle (10).

8. Mécanisme selon la revendication 7, dans lequel la jupe (12) présente deux parties de diamètre différent séparées l'une de l'autre par une zone de raccordement (15), caractérisé en ce que la déformation locale (40) affecte en totalité la partie de diamètre réduit de la jupe (12) en s'étendant du fond (13) du couvercle à ladite zone (15).

9. Mécanisme selon la revendication 8, caractérisé en ce que la déformation locale (40) s'étend sur une circonférence de diamètre inférieur à celui de la partie de plus grand diamètre de la jupe (12).

10. Mécanisme selon l'une quelconque des revendications précédentes, dans lequel le fond (13) du couvercle s'étend radialement au-delà des orifices (35) formés à la racine des fentes (33) du diaphragme, caractérisé en ce qu'au moins une pièce de ventilation (69) est rapportée sur le diaphragme (30) à la faveur d'un orifice (35).

## Patentansprüche

1. Zugkraftbetätigter Kupplungsmechanismus mit Tellerfeder, insbesondere für ein Kraftfahrzeug, enthaltend einen ringförmigen Deckel (10), der einen Block mit einem Boden (13) bildet und mit einem axial ausgerichteten Umfangsmantel (12) verbunden ist, wenigstens eine Druckplatte (20), die drehbeweglich mit dem Deckel (10) und im Verhältnis zum genannten Deckel (10) axial beweglich ist, eine Tellerfeder (30), die auf dem Boden (13) des Deckels (10) aufliegt und axial auf die Druckplatte (20) in einer Richtung einwirkt, in der sich die genannte Platte (20) vom Deckel (10) entfernt, wobei die Tellerfeder (30) einen als Belleville-Dichtungsring ausgebildeten Peripherieteil (31) aufweist, der auf einem auf dem Boden (13) des Deckels (10) ruhenden Auflager (14) aufliegt und sich radial weiter innen auf einem Auflage (21) abstützt, welches auf der Druckscheibe (20) ruht, und wobei die Tellerfeder (30) mit wenigstens einem Vorsprung (34) versehen ist, der sich radial über die Außenperipherie der genannten Tellerfeder (30) hinaus erstreckt, **dadurch gekennzeichnet**, daß der Mantel (12) des Deckels (10) zur Bildung von Mitteln zur Drehsicherung der Tellerfeder (30) wenigstens eine lokale Verformung (40) aufweist, die sich nach außerhalb des Deckels erstreckt und ergänzend in wenigstens einer Umfangsrichtung mit dem genannten radialen Vorsprung (34) der Tellerfeder (30) zusammenwirken kann.

2. Mechanismus nach Anspruch 1, **dadurch gekennzeichnet**, daß der Vorsprung (34) eine dreieckige Form mit abgestumpftem Scheitel hat.

3. Mechanismus nach Anspruch 2, **dadurch gekennzeichnet**, daß der Vorsprung (34) zwei in umgekehrter Richtung geneigte Flächen aufweist, die sich beiderseits eines flachen Teils erstrecken.

4. Mechanismus nach Anspruch 2 oder 3, **dadurch gekennzeichnet**, daß der genannte flache Teil im wesentlichen tangential zu einem bestimmten Kreisumfang der Einheit ausgerichtet ist.

5. Mechanismus nach Anspruch 4, **dadurch gekennzeichnet**, daß der Vorsprung (34) mit dem Peripherieteil (31) der Tellerfeder (30) durch Abrundungen (41) verbunden ist.

6. Mechanismus nach einem der Ansprüche 1 bis 5, **dadurch gekennzeichnet**, daß die lokale Verformung (40) halbwellenförmig ist und sich innen wenigstens in einer Umfangsrichtung an die Form des Vorsprungs (34) anpaßt.

7. Mechanismus nach Anspruch 6, **dadurch gekennzeichnet**, daß die lokale Verformung (40) am Kreisumfang geschlossen ist und sich axial in der dem Boden (13) des Deckels (10) entgegengesetzten Richtung erstreckt.

8. Mechanismus nach Anspruch 7, wobei der Mantel (12) zwei Teile von unterschiedlichem Durchmesser aufweist, die voneinander durch eine Verbindungszone (15) getrennt sind, **dadurch gekennzeichnet**, daß die lokale Verformung (40) vollständig auf den Teil mit dem reduzierten Durchmesser des Mantels (12) übergreift und sich vom Boden (13) des Deckels bis zur genannten Zone (15) erstreckt.

9. Mechanismus nach Anspruch 8, **dadurch gekennzeichnet**, daß sich die lokale Verformung (40) über einen Kreisumfang erstreckt, dessen Durchmesser kleiner ist als der des Teils mit größerem Durchmesser des Mantels (12).

10. Mechanismus nach einem der vorherigen Ansprüche, wobei der Boden (13) des Deckels sich radial über Öffnungen (35) hinaus erstreckt, die an der Wurzel der Schlitze (33) der Tellerfeder ausgebildet sind, **dadurch gekennzeichnet**, daß wenigstens ein Belüftungsteil (69) mit Hilfe einer Öffnung (35) an der Tellerfeder (30) angebaut ist.

## Claims

1. A diaphragm clutch mechanism of the pull-off type, especially for a motor vehicle, comprising an annular cover plate (10) which has an integral base (13) joined to an axially orientated peripheral skirt (12), at least one pressure plate (20) which is coupled to the cover plate (10) for rotation with it and which is movable axially with respect to the said cover plate (10), a diaphragm (30) which, being in engagement on the base (13) of the cover plate (10), acts axially on the pressure plate (20) in a direction such as to move the said plate (20) away from the cover plate (10), wherein the diaphragm (30) has a peripheral portion (31) defining a Belleville ring, bearing on an abutment (14) carried by the base (13) of the cover plate (10) and, radially inwardly thereof, bearing on an abutment (21) carried by the pressure plate (20), and wherein the diaphragm (30) is provided with at least one projection (34) extending radially beyond the outer periphery of the said diaphragm (30), characterised in that, to define stop means for preventing rotation of the diaphragm (30), the skirt (12) of the cover plate (10) has at least one local deformation (40) extending towards the outside of the cover plate and adapted to cooperate, in a complementary manner and at least in a circumferential direction, with the said radial projection (34) of the diaphragm (30).

2. A mechanism according to Claim 1, characterised in that the projection (34) is of a triangular shape having a truncated apex.

3. A mechanism according to Claim 2, characterised in that the projection (34) has two faces which are inclined in opposite directions, and which extend on either side of a flat portion.

4. A mechanism according to Claim 2 or Claim 3, characterised in that the said flat portion is orientated in a generally tangential direction with respect to a given circumference of the assembly.

5. A mechanism according to Claim 4, characterised in that the projection (34) is joined to the peripheral portion (31) of the diaphragm (30) through rounded portions.

6. A mechanism according to any one of Claims 1 to 5, characterised in that the local deformation (40) is shaped in the form of a half wave, and fits the shape of the projection (34) internally, at least in a circumferential direction.

7. A mechanism according to Claim 6, characterised in that the local deformation (40) is closed circumferentially and extends axially in a direction away from the base (13) of the cover plate (10).

8. A mechanism according to Claim 7, in which the skirt (12) has two portions of different diameters which are separated from each other by a junction zone (15), characterised in that the local deformation (40) is formed entirely in the portion of the skirt (12) having the smaller diameter, and extends from the base (13) of the cover plate to the said zone (15).

9. A mechanism according to Claim 8, characterised in that the local deformation (40) extends over a circumference having a diameter smaller than that of the portion of the skirt (12) having the larger diameter.

10. A mechanism according to any one of the preceding Claims, in which the base (13) of the cover plate extends radially beyond apertures (35) formed at the root of the slots (33) of the diaphragm, characterised in that at least one ventilating member (60) is carried on the diaphragm (30) in an aperture (35).
